Europäisches Patentamt

European Patent Office

Office européen des brevets

(19)

(11) **EP 1 426 812 A2**

(12) **EUROPEAN PATENT APPLICATION**

(43) Date of publication:
**09.06.2004 Bulletin 2004/24**

(51) Int Cl.⁷: **G02F 1/13357**, G02F 1/1335

(21) Application number: **03027950.9**

(22) Date of filing: **04.12.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **05.12.2002 JP 2002353295**

(71) Applicant: **Kabushiki Kaisha Toyota Jidoshokki Kariya-shi, Aichi-ken (JP)**

(72) Inventors:
• **Takeuchi, Norihito**
  **Kariya-shi Aichi-ken (JP)**
• Isogai, Fumikazu
  Kariya-shi Aichi-ken (JP)
• Mita, Yasuya
  Kariya-shi Aichi-ken (JP)
• Niida, Eiki
  Kariya-shi Aichi-ken (JP)

(74) Representative:
**Leson, Thomas Johannes Alois, Dipl.-Ing.
Tiedtke-Bühling-Kinne & Partner GbR,
TBK-Patent,
Bavariaring 4
80336 München (DE)**

(54) **Optical element, planar lighting unit and liquid crystal display unit**

(57)     An optical element is arranged between a planar lighting element and a liquid crystal panel for harvesting light that exits from the planar lighting element. The optical element has an incidence plane and a plurality of protrusions. The light that exits from the planar lighting element enters into the optical element. A plurality of the protrusions is provided on a surface facing the incidence plane. Substantially all the protrusions are each arranged in a one-to-one correspondence with an opening of a respective pixel of the liquid crystal panel.

# FIG. 1

EP 1 426 812 A2

**Description**

BACKGROUND OF THE INVENTION

The present invention relates to an optical element, a planar lighting unit and a liquid crystal display unit.

Conventionally, a liquid crystal display unit or a thin-dimensioned display unit is employed for a personal computer, a personal digital assistant (PDA) and the like. Such a liquid crystal display unit needs a high front brightness because a user looks at the unit mostly from its front.

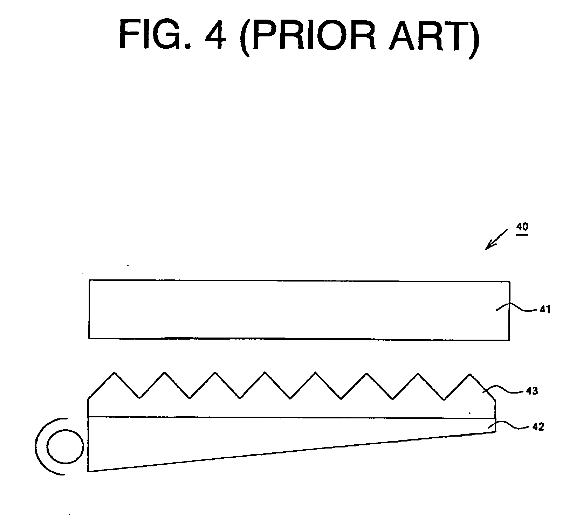

FIG. 4 illustrates a schematic cross-sectional view of a liquid crystal display unit 40 according to a prior art. Referring to FIG. 4, a light-collecting optical element 43, which is called a brightness enhancement film, is arranged on the surface of a light guiding plate 42. The light guiding plate 42 is provided on the back surface of a liquid crystal panel 41. The brightness enhancement film 43 refracts light, which exits from the light guiding plate 42 in an oblique direction relative to the liquid crystal panel 41, so that the light travels in a nearly perpendicular direction relative to the liquid crystal panel 41. As a result of the brightness enhancement film 43, the light that exits from a backlight is collected so as to improve the front brightness of the liquid crystal display unit 40.

The structure of the brightness enhancement film 43 is, for example, disclosed in FIG. 1 of Unexamined Japanese Patent Publication No. 10-506500. In that publication, a prism with triangular section is striped in a prism sheet. This prism portion collects the light from the backlight.

Referring again to FIG. 4, a plurality of pixels is arranged in a matrix in the liquid crystal panel 41, and each of the pixels provides a red, blue or green color filter. Each of the pixels has an opening portion and a peripheral portion. The opening portion permits light to penetrate therethrough. The peripheral portion provides an electrode, a control circuit for a liquid crystal and the like, and does not permit light to penetrate therethrough.

The light that exits from the light guiding plate 42 is collected by the prisms of the prism sheet so as to travel in a close perpendicular direction relative to the liquid crystal panel 41. However, the light collected by a portion of the prism that is vertically positioned under the peripheral portion of the respective pixel cannot penetrate through the liquid crystal panel 41 so that this light does not contribute to enhancing the brightness of the liquid crystal display unit 40. Namely, when the liquid crystal display unit 40 vertically arranges the prisms under the peripheral portions of the pixels, the light is not efficiently used. Therefore, there is a need for providing an optical element that improves front brightness and efficient use of light and for providing a planar lighting unit and a liquid crystal display unit which have the above optical element.

SUMMARY OF THE INVENTION

In accordance with the present invention, an optical element is arranged between a planar lighting element and a liquid crystal panel for collecting light that exits from the planar lighting element. The optical element has an incidence plane and a plurality of protrusions. The light that exits from the planar lighting element enters into the optical element. A plurality of the protrusions is provided on a surface facing the incidence plane. Substantially all the protrusions are each arranged in a one-to-one correspondence with an opening of a respective pixel of the liquid crystal panel.

Other aspects and advantages of the invention will become apparent from the following description, taken in conjunction with the accompanying drawings, illustrating by way of example the principles of the invention.

BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:

FIG. 1 is a schematic cross-sectional view of a liquid crystal display unit according to a preferred embodiment of the present invention;

FIG. 2 is an enlarged schematic view of pixels of a liquid crystal panel according to the preferred embodiment of the present invention;

FIG. 3 is an enlarged partially schematic cross-sectional view of the liquid crystal display unit according to the preferred embodiment of the present invention; and

FIG. 4 is a schematic cross-sectional view of a liquid crystal display unit according to a prior art.

DETAILED DESCRIPTION OF THE PREFERRED EMBODIMENTS

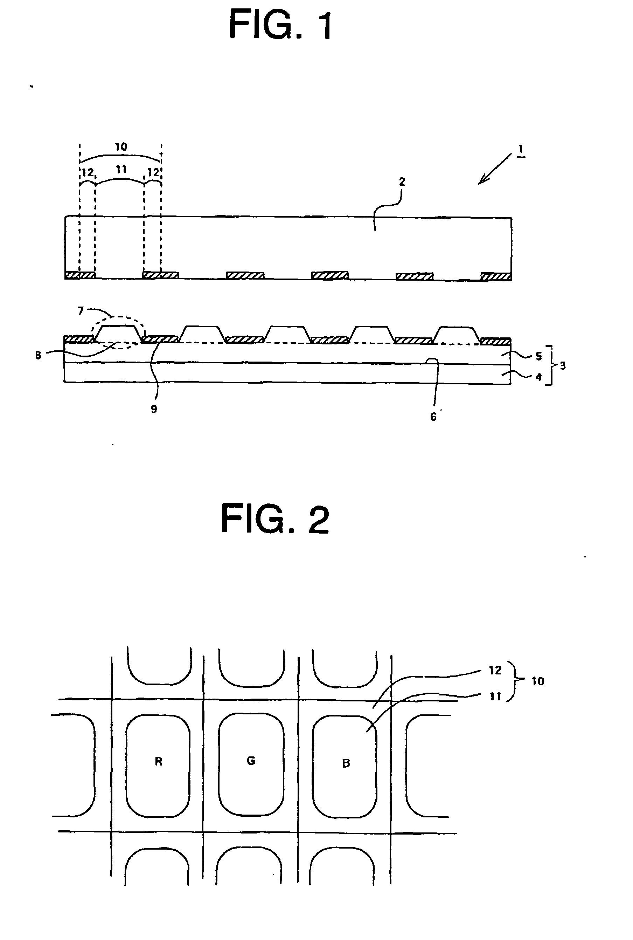

A preferred embodiment of the present invention will now be described with reference to FIGs. 1 through 3. The present invention is applied to a liquid crystal display unit 1 in the preferred embodiment. The liquid crystal display unit 1 includes a liquid crystal panel 2 and a backlight 3 that comprises an organic electroluminescent element 4.

The known liquid crystal panel 2 arranges a plurality of pixels 10 in a matrix for displaying characters, images and the like. Each of the pixels 10 has a red, blue or green color filter. Each of the pixels 10 has an opening portion 11 and a peripheral portion 12. The opening portion 11 permits light to penetrate therethrough. The peripheral portion 12 provides a control circuit for a liquid crystal, an electrode and the like, and does not permit light to penetrate therethrough.

The backlight 3 is constituted of the organic electroluminescent element or a planar lighting element 4 and a brightness enhancement film or an optical element 5. The organic electroluminescent element 4 is formed in such a manner that an opaque electrode made of indium tin oxide (ITO), an organic layer and a metal electrode are layered on a glass substrate 15 in order.

As an electric voltage is applied between both electrodes of the organic electroluminescent element 4, a luminous layer 16 emits light. In the preferred embodiment, the organic luminous layer 16 is configured in such a manner that a luminous color becomes white. Then, the light emitted from the luminous layer 16 penetrates through the glass substrate 15 and exits outside of the organic electroluminescent element 4.

In the organic electroluminescent element 4 of the preferred embodiment, the electrodes and a layer made of organic compound are planar in shape. As electric voltage is applied between the electrodes, every portion of the luminous layer 16 simultaneously emits light with the same color. Accordingly, the organic electroluminescent element 4 of the preferred embodiment is a planar luminous element.

The brightness enhancement film 5, which is made of opaque resin, has a flat surface serving as an incidence plane 6. A plurality of protrusions 7 is formed on the opposite side relative to the incidence plane 6. The incidence plane 6 closely contacts the glass substrate 15 of the organic electroluminescent element 4.

Each of the protrusions 7 formed on the opposite side relative to the incidence plane 6 forms a conical frustum in shape and is arranged in such a manner that the basal plane of each protrusion 7 is included in the same plane. A plane defined by the basal plane of each protrusion 7 is defined as a facing plane 8. The facing plane 8 is parallel to the incidence plane 6.

As shown in FIG. 1, every protrusion 7 has the same shape. The protrusions 7 are arranged at an interval that is equal to the interval between the coadjacent pixels 10 of the liquid crystal panel 2 in matrix, as well as the pixels 10 of the liquid crystal panel 2. Namely, the protrusions 7 are arranged at positions respectively corresponding to the opening portions 11 of the pixels 10 of the liquid crystal panel 2.

Aluminum 9 is vapor deposited on a portion of the brightness enhancement film 5 between the coadjacent protrusions 7. A surface of the aluminum 9 facing the brightness enhancement film 5 forms a slight irregularity. That is, this surface of the aluminum 9 serves as a reflector for reflecting all light reaching the portion between the coadjacent protrusions 7 into the optical element. In addition, the reflector also functions to scatter light.

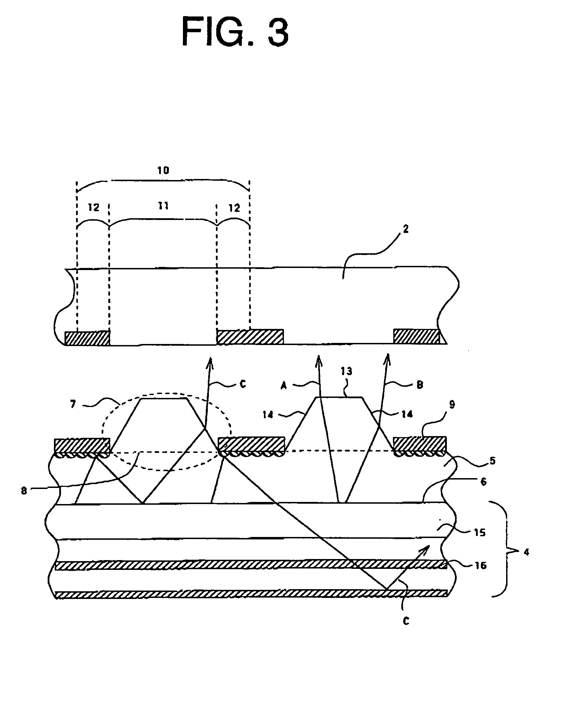

The operation of the liquid crystal display unit 1 will now be described with reference to FIG. 3.

As an electric voltage is applied between the electrodes of the organic electroluminescent element 4, the organic electroluminescent element 4 emits light so that white light exits from the glass substrate 15.

The luminous layer 16 of the organic electroluminescent element 4 is planar. That is, point luminous layers are continuously arranged to form a plane. The light that exits from each point luminous layer (luminous point) uniformly emits light toward every direction from each luminous point as a center. Because the luminous points are continuously arranged to form a plane, light exits from the glass substrate 15 toward every direction.

The luminous points are continuously arranged to form a plane in the whole organic electroluminescent element 4. The brightness $I(\theta)$ of the light in a direction that makes an angle of $\theta$ with a perpendicular line of the glass substrate 15 at the portion other than the peripheral portion of the organic electroluminescent element 4 is expressed as follows:

$$I(\theta) = I_0 \cos^{1/4}\theta \qquad (1)$$

where $I_0$ denotes brightness in the direction of the perpendicular line of the glass substrate 15. Accordingly, the brightness of the organic electroluminescent element 4 in a certain direction depends only upon an angle between the certain direction and the perpendicular line of the surface of the glass substrate 15 but does not depend upon a direction in the surface of the glass substrate 15. Namely, the organic electroluminescent element 4 has an isotropic exiting characteristic for the direction in the surface of the glass substrate 15.

In addition, according to the expression (1), the brightness of light that exits from the organic electroluminescent element 4 is relatively high even in the direction that inclines relative to the glass substrate 15. Namely, the direction of light that exits from the organic electroluminescent element 4 distributes around the wide range of angles. The light that exits in the front direction of the organic electroluminescent element 4 accounts for a relatively small rate in the above light.

The path of light, when the above brightness enhancement film 5 is arranged on the glass substrate 15 of the organic electroluminescent element 4, will now be described. As shown in FIG. 3, the light emitted from the luminous layer 16 enters into the brightness enhancement film 5 through the glass substrate 15. At this moment, since the refractive index of the brightness enhancement film 5 is greater than that of the air, and since the brightness enhancement film 5 closely contacts the glass substrate 15 on the incidence plane 6 thereof, light that includes a direction for totally reflecting into the glass substrate 15 also enters into the brightness enhancement film 5 at an interface between the glass substrate 15 and the air.

A portion of the light from a portion vertically under a top surface 13 of the protrusion 7 (the light denoted by A in FIG. 3), which is substantially perpendicular to the incidence plane 6 in the incident light, enters into the incidence plane 6 of the brightness enhancement film 5. The light A directly exits through the top surface 13 of the protrusion 7. At this moment, the light A substantially does not refract. Accordingly, the light A exits from the organic electroluminescent element 4 to the incidence plane 6 of the brightness enhancement film 5 and passes through the brightness enhancement film 5 in a substantially vertical direction relative to the brightness enhancement film 5.

Thus, the light A exits from a portion of the organic electroluminescent element 4 vertically under the top surface 13 into the incidence plane 6 of the brightness enhancement film 5 in the substantially vertical direction relative to the incidence plane 6. The top surface 13 of the conical frustum-shaped protrusion 7 is provided for passing the above light without substantially changing any direction of the light. In view of the above point, it is different in operation and advantageous effect from a protrusion of a quadrangularly pyramidal frustum provided on a plate for controlling exiting light, which is disclosed in the column [0008] and FIG. 3 of Unexamined Japanese Patent Publication No. 2000-148032.

A portion of the light which does not penetrate through the top surface 13 of the protrusion 7 (the light denoted by B in FIG. 3) reaches an oblique surface 14 of the protrusion 7 provided on the brightness enhancement film 5. Incidentally, the oblique surface 14 indicates a surface between the top surface 13 and a basal plane of the protrusion 7. This light B is refracted on the oblique surface 14 so as to travel in a direction that is substantially vertical relative to the incidence plane 6 of the brightness enhancement film 5. Namely, the light that exits in an inclined direction relative to the vertical direction of the incidence plane 6 of the brightness enhancement film 5 is collected on the oblique surface 14 of the protrusion 7 in the brightness enhancement film 5 so as to travel in the direction that is substantially vertical relative to the incidence plane 6. The protrusion 7 has a conical frustum shape so that it equivalently influences on the light of all directions in the incidence plane 6.

The remainder of the light which does not directly penetrate the top surface 13 of the protrusion 7 reaches the portion between the coadjacent protrusions 7 (the light denoted by C in FIG. 3). The aluminum 9 is vapor deposited on this portion between the coadjacent protrusions 7 so that the light reaching this portion is all reflected back into the brightness enhancement film 5. The surface of the aluminum 9 forms a slight irregularity so that the reflected light is scattered in various directions. The reflected and scattered light is mostly reflected by the incidence plane 6 of the brightness enhancement film 5, a metal electrode of the organic electroluminescent element 4 or the like and ultimately reaches the protrusion 7. A portion of the light reaching the protrusion 7 is totally reflected to stay in the brightness enhancement film 5, and the other portion of the light exits through the protrusion 7. The exiting light is refracted to travel in the direction that is substantially vertical relative to the incidence plane 6 of the brightness enhancement film 5.

According to the preferred embodiment, the following advantageous effects are obtained.

(1) The brightness enhancement film 5 closely contacts the glass substrate 15 of the organic electroluminescent element 4. Accordingly, a critical angle at an interface between the glass substrate 15 and the brightness enhancement film 5 becomes smaller than that at an interface between the glass substrate 15 and the air, so that the light which does not exit from the glass substrate 15 by being totally reflected at the interface between the glass substrate 15 and the air also enters into the brightness enhancement film 5. Therefore, more light of the light emitted from the organic electroluminescent element 4 exits outside of the organic electroluminescent element 4 through the brightness enhancement film 5.

(2) Each of the protrusions 7 has the top surface 1 that is in parallel with the incidence plane 6. Accordingly, in comparison to a brightness enhancement film with a conical protrusion, only a relatively small portion of light that exits at a desired angle from the organic electroluminescent element 4 changes its direction at the brightness enhancement film 5. As a result, the front brightness effectively improves.

(3) Each of the protrusions 7 has the oblique surface 14 that inclines relative to the incidence plane 6. Accordingly, the light reached the oblique surface 14 refracts to travel in the direction that is substantially vertical relative to the incidence plane 6. As a result, the light that exits at a certain inclined angle relative to a planar exit plane at the organic electroluminescent element 4 travels in a direction that is substantially vertical relative to the exit plane so that the above light also contributes to improving the front brightness.

(4) Each of the protrusions 7 has a conical frustum shape. Accordingly, the oblique surface 14 does not have a directional property for collecting light. Namely, any light that reaches the oblique surface 14, regardless of its direction in the incidence plane 6, identically refracts to travel in the direction that is substantially vertical relative to the incidence plane 6. For the above reason, the front brightness of the organic electroluminescent element 4, which is the planar luminous element having an isotropic exiting characteristic, is effectively improved.

(5) The protrusions 7 are each arranged in a one-to-one correspondence with the opening portion 11 of the respective pixel 10 of the liquid crystal panel 2. Accordingly, the light which is substantially perpendicular to the liquid crystal panel 2 exits toward the opening portion 11 of the respective pixel 10.

(6) The aluminum 9 is vapor deposited between the coadjacent protrusions 7. Accordingly, light does not exit through any portion other than the protrusion 7 so that the usability of light is improved.

(7) The surface of the aluminum 9, which is vapor deposited between the coadjacent protrusions 7, forms a slight irregularity. Accordingly, the light reflected between the coadjacent protrusions 7 is also scattered at the same time. Therefore, the amount of light that is reflected between the coadjacent protrusions 7 and then reaches the protrusion 7 to exit through the protrusion 7 increases so that the usability of light is further improved.

(8) The brightness enhancement film 5 has the conical frustum-shaped protrusions 7 and closely contacts the organic electroluminescent element 4 to form a planar luminous unit. Accordingly, a planar luminous unit having a relatively high front brightness is obtained.

(9) The brightness enhancement film 5 has the conical frustum-shaped protrusions 7 and closely contacts the organic electroluminescent element 4 to form a planar luminous unit. The planar luminous unit is utilized as the backlight 3 for the liquid crystal display unit 1. Accordingly, the front brightness of the liquid crystal panel 2 of the liquid crystal display unit 1 improves so that the liquid crystal display unit 1 having a relatively high front visibility is obtained.

The present invention is not limited to the embodiment described above but may be modified into the following alternative embodiments.

In the preferred embodiment, each of the protrusions 7 has a conical frustum shape. In an alternative embodiment to those of the above preferred embodiment, the shape of the protrusion 7 is not limited to a conical frustum but may be a multiangularly pyramidal frustum. Even if the shape of the protrusion 7 is a multiangularly pyramidal frustum, the similar advantageous effects to those of the conical frustum are obtained.

In the preferred embodiment, the organic electroluminescent element 4 is employed as the backlight 3 of the liquid crystal display unit 1. In an alternative embodiment to those of the above preferred embodiment, the backlight 3 of the liquid crystal display unit 1 is not limited to the organic electroluminescent element 4, but a planar lighting unit constituted of a light source and a light guiding plate may be employed as the backlight 3. In this state, the front brightness and the usability of light are improved in the same manner as in a state where the organic electroluminescent element 4 is employed as the backlight 3.

In the preferred embodiment, the aluminum 9 is vapor deposited between the coadjacent protrusions 7 to form a reflector. In an alternative embodiment, the reflector is not limited to the vapor-deposited aluminum 9 but may be another material such as metal having a relatively high reflectance. Namely, if the material only reflects light reaching the portion between the coadjacent protrusions 7 without passing that light through the brightness enhancement film 5, the similar advantageous effects to those of the preferred embodiment are obtained.

In the preferred embodiment, the luminous color of the organic electroluminescent element 4 is white. In an alternative embodiment to those of the preferred embodiment, the luminous color of the organic electroluminescent element 4 is not limited to white but may be another color.

In the preferred embodiment, the planar lighting unit constituted of the organic electroluminescent element 4 and the brightness enhancement film 5 is utilized as the backlight 3 for the liquid crystal display unit 1. In an alternative embodiment, the above planar lighting unit may be utilized for another use, such as a stand-alone lighting unit. In this state, the planar lighting unit has a relatively high front brightness.

Therefore, the present examples and embodiments are to be considered as illustrative and not restrictive, and the invention is not to be limited to the details given herein but may be modified within the scope of the appended claims.

An optical element is arranged between a planar lighting element and a liquid crystal panel for harvesting light that exits from the planar lighting element. The optical element has an incidence plane and a plurality of protrusions. The light that exits from the planar lighting element enters into the optical element. A plurality of the protrusions is provided on a surface facing the incidence plane. Substantially all the protrusions are each arranged in a one-to-one correspondence with an opening of a respective pixel of the liquid crystal panel.

## Claims

1. An optical element arranged between a planar lighting element and a liquid crystal panel for harvesting light that exits from the planar lighting element, **characterized in that** the light that exits from the planar lighting element enters to an incidence plane, and **in that** a plurality of protrusions is provided on a surface facing the incidence plane, wherein substantially all the protrusions are each arranged in a one-to-one correspondence with an opening of a respective pixel of the liquid crystal panel.

2. The optical element according to claim 1, wherein the planar lighting element includes a linear luminous element and a planar light guiding body, the planar light guiding body introducing the light from the luminous element through one end surface thereof and exiting the light from a planar exit plane.

3. The optical element according to any one of claims 1 and 2, wherein the protrusion has a surface which is parallel with the incidence plane.

4. The optical element according to claim 1, wherein the planar lighting element is an organic electroluminescent element, the protrusion having one of a conical frustum shape and a multiangularly pyramidal frustum shape.

5. The optical element according to claim 4, **characterized in that** a reflector is arranged between the coadjacent protrusions for reflecting substantially all the light reaching between the coadjacent protrusions into the optical element.

6. The optical element according to claim 5, wherein the reflector scatters the light reaching between the coadjacent protrusions into the optical element.

7. The optical element according to any one of claims 5 and 6, wherein the reflector forms a slight irregularity.

8. The optical element according to any one of claims 5 through 7, wherein the reflector is made of aluminum.

9. The optical element according to claim 8, wherein the aluminum is vapor deposited between the coadjacent protrusions.

10. The optical element according to any one of claims 1 and 4 through 9, wherein the optical element adheres to the planar lighting element.

11. A planar lighting unit comprising an organic electroluminescent element and the optical element according to any one of claims 4 through 10, the optical element being arranged on a side from which the organic electroluminescent element exits the light.

12. A liquid crystal display unit comprising a liquid crystal panel and the planar lighting unit according to claim 11, the planar lighting unit being arranged away from an observer of the liquid crystal panel relative to the liquid crystal panel.

# FIG. 1

# FIG. 2

# FIG. 3

# FIG. 4 (PRIOR ART)